# EUROPÄISCHE PATENTSCHRIFT

(11) **EP 2 332 155 B1**
(45) Veröffentlichungstag und Bekanntmachung des Hinweises auf die Patenterteilung: **17.05.2017**
(21) Anmeldenummer: 09781413.1
(22) Anmeldetag: 03.08.2009
(51) Int. Cl.: H01F 7/02, G02B 26/08, H02K 33/18, H01F 7/06

(54) **MAGNETJOCH, MIKROMECHANISCHES BAUTEIL UND HERSTELLUNGSVERFAHREN FÜR EIN MAGNETJOCH UND EIN MIKROMECHANISCHES BAUTEIL**
MAGNETIC YOKE, MICROMECHANICAL COMPONENT, AND METHOD FOR PRODUCING A MAGNETIC YOKE AND A MICROMECHANICAL COMPONENT
CULASSE D AIMANT, COMPOSANT MICROMECANIQUE ET PROCEDE DE FABRICATION POUR UNE CULASSE D' AIMANT ET UN COMPOSANT MICROMECANIQUE

(30) Priorität: 25.09.2008 DE 102008042346
(43) Veröffentlichungstag der Anmeldung: 15.06.2011
(73) Patentinhaber: Robert Bosch GmbH, 70442 Stuttgart (DE)
(72) Erfinder: PIRK, Tjalf, 70195 Stuttgart (DE); PINTER, Stefan, 72764 Reutlingen (DE); MUCHOW, Joerg, 72764 Reutlingen (DE); FRITZ, Joachim, 72770 Reutlingen (DE); FRIESE, Christoph, 72764 Reutlingen (DE)
(86) Internationale Anmeldenummer: PCT/EP2009/060020
(87) Internationale Veröffentlichungsnummer: WO 2010/034551

(56) Entgegenhaltungen:
- EP-A- 1 858 141
- DE-A1- 3 723 776
- US-A- 5 319 339

## Beschreibung

Die Erfindung betrifft ein Magnetjoch. Ebenso betrifft die Erfindung ein mikromechanisches Bauteil. Des Weiteren betrifft die Erfindung ein Herstellungsverfahren für ein Magnetjoch und ein Herstellungsverfahren für ein mikromechanisches Bauteil.

### Stand der Technik

Ein mikromechanisches Bauteil kann zum Verstellen eines verstellbaren Stellelements gegenüber einer fest angeordneten Halterung einen magnetischen Antrieb, einen elektrostatischen Antrieb und/oder einen piezoelektrischen Antrieb aufweisen. Das verstellbare Stellelement ist beispielsweise eine Spiegelplatte, welche mittels des Antriebs um mindestens eine Drehachse, vorzugsweise um zwei Drehachsen, verstellbar ist.

Ein mikromechanisches Bauteil mit einem magnetischen Antrieb weist gegenüber einem vergleichbaren Bauteil mit einem elektrostatischen Antrieb den Vorteil auf, dass mit technisch sinnvollen Stromstärken von unter 100 mA vergleichsweise hohe Drehmomente erzielbar sind. Um mittels elektrostatischer Kammantriebe entsprechende Drehmomente zu erzielen, sind bei Gapabständen von ca. 5µm Spannungen in einem Bereich von mehreren 100V notwendig. Die technische Realisierung einer derartigen Spannung ist vergleichsweise aufwendig, insbesondere da Risiken eines Überschlags oder eines Pull-Ins bestehen. Ein weiterer Vorteil eines magnetischen Antriebs gegenüber einem elektrostatischen Antrieb ist die in erster Nährung zu der angelegten Spannung lineare Lorentzkraft.

Allerdings ist bei einem mikromechanischen Bauteil mit einem magnetischen Antrieb die Aufbau- und Verbindungstechnik oft verhältnismäßig aufwendig. Insbesondere ein mikromechanisches Bauteil mit einem magnetischen Antrieb und einem um zwei Drehachsen verstellbaren Stellelements ist deshalb nur mittels eines vergleichsweise großen Arbeitsaufwands herstellbar.

Die EP 77 8 657 BI und die WO 2005/078509 A2 beschreiben jeweils einen magnetischen Antrieb zum Verstellen eines Stellelements. Damit das Stellelement um zwei Drehachsen verstellbar ist, weisen die magnetischen Antriebe mehrere Permanentmagnete auf, welche in einer bevorzugten Stellung mit einem vergleichsweise geringen Abstand zueinander angeordnet werden müssen. Dabei sollen die Permanentmagneten in der bevorzugten Stellung so zueinander angeordnet werden, dass die Magnetisicrungsrichtungen der Permanentmagneten nicht-parallel zueinander ausgerichtet sind. Somit treten beim Herstellen der magnetischen Antriebe abstoßende Kräfte zwischen den Permanentmagneten auf. Dies macht das Herstellen der magnetischen Antriebe vergleichsweise arbeitsaufwändig und kompliziert. Insbesondere sind Klebeprozesse hierbei nicht möglich.

Des Weiteren weisen die in der EP 77 8 657 BI und der WO 2005/078509 A2 beschriebenen magnetischen Antriebe ein relativ großes Volumen auf. Das Einbauen der magnetischen Antriebe in ein elektronisches Bauteil ist somit erschwert.

In der US 5,319,339 A ist eine rohrförmige Magneteinrichtung beschrieben, welche einen Innenhohlraum aufweist, dessen Breite senkrecht zu einer Längsausdehnung der Magneteinrichtung von einer ersten Seite zu einer zweiten Seite abnimmt.

Die EP 1858 141 A beschreibt einen zweidimensionalen Scanner mit einem Magnetjoch, in dessen Jochspalts ein verstellbar ausgebildetes Stellelement angeordnet ist. Auf dem Stellelement sind Leiterbahnen ausgebildet, welche hinsichtlich einer das Stellelement mittig schneidenden Achse, welche senkrecht zu den Magnetfeldlinien des Magnetjochs ausgerichtet, eine Asymmetrie aufweisen.

Die DE 37 23 776 A1 offenbart den Oberbegriff des Anspruchs 1.

### Offenbarung der Erfindung

Die Erfindung schafft ein Magnetjoch mit den Merkmalen des Anspruchs 1, ein mikromechanischce Bauteil mit den Merkmalen des Anspruchs 5, ein Herstellungsverfahren für ein Magnetjoch mit den Merkmalen des Anspruchs 6 und ein Herstellungsverfahren für ein mikromechanisches Bauteil mit den Merkmalen des Anspruchs 7.

Vorteilhafte Weiterbildungen des Magnetjochs und der mikromechanischen Bauteile sind in den Unteransprüchen beschrieben. Die Vorteile dieser Weiterbildungen sind auch bei entsprechenden Weiterbildungen der Herstellungsverfahren gewährleistet.

### Kurze Beschreibung der Zeichnungen

Weitere Merkmale und Vorteile der vorliegenden Erfindung werden nachfolgend anhand der Figuren erläutert. Es zeigen;
- Figur 1A und 1B: einen Querschnitt und eine Draufsicht zum Darstellen einer Ausführungsform des Magnetjochs;
- Figur 2A und 2B: eine Draufsicht und eine Seitenansicht eines Zwischenrahmens zum Darstellen einer Ausfühningsform des mikromechanischen Bauteils;
- Figur 3: eine Seitenansicht zum Darstellen eines mikromechanischen Bauteils, welches nicht unter die vorliegende Erfindung fällt;
- Figuren 4A und 4B: eine Vorder- und eine Rückseite eines Zwischenrahmens mit einem als Spiegelplatte ausgebildeten Stelletement;
- Figur 5: einen Querschnitt zum Darstellen eines mikromechanischen Bauteils, welches nicht unter die vorliegende Erfindung fällt;
- Figur 6: einen Querschnitt zum Darstellen eines mikromechanischen Bauteils, welches nicht unter die vorliegende Erfindung fällt;
- Figur 7: einen Querschnitt zum Darstellen eines mikromechanischen Bauteils, welches nicht unter die vorliegende Erfindung fällt;
- Figur 8: einen Teilausschnitt eines Querschnitts zum Darstellen eines mikromechanischen Bauteils, welches nicht unter die vorliegende Erfindung fällt; und
- Figur 9: einen Querschnitt durch einen Außenrahmen zum Darstellen eines mikromechanischen Bauteils, welches nicht unter die vorliegende Erfindung fällt.

### Ausführungsformen den Erfindungen

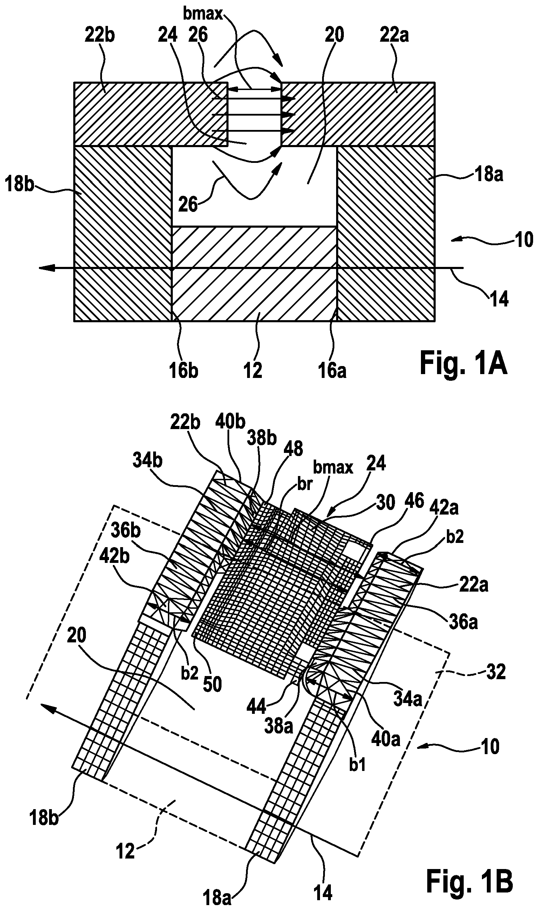

Figur 1A und 1B zeigen einen Querschnitt und eine Draufsicht zum Darstellen einer Ausführungsform des Magnetjochs.

Das in Figur 1A als Querschnitt schematisch wiedergegebene Magnetjoch 10 umfasst einen Hartmagneten 12 mit einer Magnetisierungsrichtung 14. Der I lartmagnet 12 kann ein Permanentmagnet sein Ebenso kann der Hartmagnet 12 nach einem Zusammensetzen des Magnetjochs 10 aus seinen einzelnen, im Weiteren beschriebenen Komponenten mittels eines Magnetisierungsverfahrens magnetisiert werden.

Die Magnetisierungsrichtung 14 verläuft von einer ersten Seitenfläche 16a zu einer zweiten Seitenifläche 16b des Hartmagneten 12. An jeder der beiden Seitenflächen 16a und 16b ist ein Jocharm 18a und 18b aus einem weichmagnetischen Material fest angeordnet. Die beiden Jocharme 18a und 19b erstrecken sich von den Hartmagneten 12 in eine gemeinsame Richtung und spannen dabei einen Jochzwischenraum 20 auf. Die Breite des Jochzwischenraums 20 entlang der Magnetisierungsrichtung 14 ist daher gleich der Breite des Hartmagneten 12 zwischen den Seitenflächen 16a und 16b.

An den beiden dem Hartmagneten 12 gegenüberliegenden Enden der Jocharme 18a und 18b sind Polschuhe 22a und 22b fest angeordnet, welche in Figur 1A jedoch nur schematisch skizziert sind. Vorzugsweise sind die Polschuhe 22a und 22b aus einem weichmagnetischen Material geformt. Auf den Aufbau und die Form der Polschuhe 22a und 22b wird bei der Beschreibung der Figur 1B genauer eingegangen.

Die Polschuhe 22a und 22b können einstückig mit dem zugehörigen Jocharm 18a oder 18b ausgebildet sein. Die Darstellung der Polschuhe 22a und 22b mit den Jocharmen 18a und 18b als zwei Einzelkomponenten ist hier lediglich auf Grund einer besseren Anschaulichkeit gewählt.

Die beiden Polschuhe 22a und 22b sind beabstandet zueinander an den Jocharmen 18a und 18b angeordnet. Zwischen dem an dem ersten Jocharm 18a angeordneten ersten Polschuh 22a und dem an dem zweiten Jocharm 18b angeordneten zweiten Polschub 22b liegt ein Jochspalt 24. Der Jochspalt 24 hat parallel zu der Magnetisierungsrichtung 14 eine maximale Breite bmax, welche kleiner als der Abstand zwischen den beiden Seitenflächen 16a und 16b ist. In den Jochspalt 24 liegt ein Magnetfeld mit magnetischen Feldlinien 26 vor. Dabei sind die Feldlinien 26 des Magnetfelds im Inneren des Jochspalts 24 entgegen der Magnetisierungsrichtung 14 gerichtet.

Figur 1B zeigt eine Draufsicht auf das Magnetjoch 10 zur genaueren Beschreibung der Polschuhe 22a und 22b. Der besseren Übersichtlichkeit wegen ist der Hartmagnet 12 in Figur 1B nur in gestrichelten Linien dargestellt.

Wie beim Betrachten der Figur 1B auffällt, ist die maximale Breite bmax des Jochspalts 16 größer als eine Breite br eines Zwischenrahmens 30 gewählt. Der Zwischenrahmen 30 kann somit im Jochspalt 24 des Magnetjochs 10 angeordnet werden (siehe Fig. 1B). Auf den Aufbau und die Funktion des Zwischenrahmens 30 wird unten noch genauer eingegangen.

Für das Magnetjoch 10 kann eine Mittelebene 32 definiert werden, welche parallel zu der Magnetisierungsrichtung 14 ausgerichtet ist und den Hartmagneten 12 und die beiden Jocharme 18a und 18b schneidet. Vorzugsweise verläuft die Mittelebene 32 parallel zu den Feldlinien mittig sowohl durch den Hartmagneten 12 als auch durch die beiden Jocharme 18a und 18b. Insbesondere kann die Mittelebene 32 den Hartmagneten 12 und/oder mindestens einen der beiden Jocharme 18a und 18b jeweils in zwei zueinander symmetrische Hälften teilen.

Demgegenüber sind die Polschuhe 22a und 22b des Magnetjochs 10 jeweils so ausgebildet, dass ihre Masseverteilung keine Symmetrie hinsichtlich der Mittelebene 32 aufweist. Das Magnetjoch 10 kann deshalb als unsymmetrisches Magnetjoch bezeichnet werden.

Beispielsweise unterteilt die Mittelebene 32 einen Polschuh 22a in eine erste Hälfte 34a und in eine zweite Hälfte 36a, wobei die erste Hälfte 34a gegenüber der zweiten Hälfte 36a eine Zusatzmasse 38a aufweist, welche in den Jochspalt 34 hineinragt. Die Zusatzmasse 38a ist vorzugsweise aus einem Material mit guten Magnetflusseigenschaften geformt. Die Zusatzmasse 38a kann einstückig mit dem Polschuh 22a ausgebildet sein. Es wird hier jedoch daraufhingewiesen, dass die Polschuhe 22a und 22b auch aus mehreren Komponenten zusammengesetzt sein können, welche zumindest teilweise beabstandet zueinander angeordnet sind.

Vorzugsweise erstreckt sich die Zusatzmasse 38a oder 38b in eine Richtung senkrecht zu der Breite bmax des Jochspalts 24 entlang der gesamten ersten Hälfte 34a oder 34b. Selbstverständlich kann die Zusatzmasse 38a hinsichtlich einer Richtung senkrecht zur maximalen Breite bmax auch eine geringere Ausdehnung aufweisen.

Bei dem dargestellten Beispiel der Figur 1B unterteilt die Mittelebene 32 beide Polschuhe 22a und 22b in jeweils eine erste Hälfte 34a oder 34b mit der Zusatzmasse 38a oder 38b und eine zweite Hälfte 36a oder 36b ohne Zusatzmasse 38a oder 38b. Ebenso kann jedoch auch ein Magnetjoch realisierbar sein, bei welchen die Mittelebene 32 nur einen Polschuh 22a oder 22b in eine erste Hälfte 34a oder 34b mit einer Zusatzmasse 38a oder 38b gegenüber der zweiten Hälfte 36a oder 36b unterteilt. Der andere Polschuh 22a oder 22b kann in diesem Fall eine Masseverteilung aufweisen, welche gegenüber der Mittelebene 32 symmetrisch ist.

Die Unsymmetrie der Polschuhe 22a und 22b kann auch beschrieben werden, indem eine Vorderseite und eine Hinterseite des Magnetjochs 10 definiert werden, wobei sich der Jochzwischenraum 20 und der Jochspalt 24 von der Vorderseite zu der Hinterseite erstrecken. Der erste der beiden Polschuhe 22a weist eine erste Seitenfläche 40a an der Vorderseite und eine zweite Seitenfläche 42a an der Rückseite auf. Die erste Seitenfläche 40a des Polschuhs 22a hat in einer Richtung parallel zu der maximalen Breite bmax eine erste Breite b1 Die zweite Seite des ersten Polschuhs 22a weist in der Richtung parallel zur maximalen Breite bmax eine zweite Breite b2 ungleich der ersten Breite b1 auf. Beispielsweise ist die erste Breite b1 größer als die zweite Breite b2 (siehe Beispiel der Figur 1B).

Dabei ragt der erste Polschuh 22a gegenüber dem ersten Jocharm 18a an der ersten Seitenfläche 40a um eine erste Höhe in den Jochspalt 24 hinein. An der zweiten Seitenfläche 42a ragt der erste Polschuh 22a jedoch um eine zweite Höhe ungleich der ersten Höhe in den Jochspalt 24 hinein.

Entsprechend kann auch der zweite Polschuhe 22b an der Rückseite eine erste Seitenfläche 40b mit der ersten Breite b1 und an der Vorderseite eine zweite Seitenfläche 42b mit der zweiten Breite b2 aufweisen. Es wird hier jedoch darauf hingewiesen, dass eine punktsymmetrische Ausbildung der beiden Polschuhe 22a und 22b keine Voraussetzung für die beschriebene Technik ist.

Die unsymmetrische Ausbildung der Polschuhe 22 bewirkt ein hinsichtlich der Mittelebene 32 unsymmetrisches Magnetfeld in dem Jochspalt 24, wobei die Feldlinien des Magnetfelds allerdings in Figur 1B der besseren Übersichtlichkeit wegen nicht eingezeichnet sind. Beispielsweise sind für den Zwischenrahmen 30 vier Ecken 44 bis 50 definiert, wobei die Ecken 44 und 46 benachbart zu dem ersten Polschuh 22a angeordnet sind und die Ecken 48 und 50 benachbart zu dem zweiten Polschuh 22b angeordnet sind. Die Ecke 48 liegt dabei diagonal der Ecke 44 gegenüber. Entsprechend definieren auch die beiden Ecken 46 und 50 eine Diagonale des Zwischenrahmens 30. Es wird hier ausdrücklich darauf eingewiesen, dass der verwendete Begriff Ecken 44 bis 50 keine kantenförmige Ausbildung der Ecken 44 bis 50 nahelegt. Beispielsweise kann es sich bei den Ecken 44 bis 50 auch um runde Abschnitte des Zwischenrahmens 30 handeln.

Auf Grund der unsymmetrischen Ausbildung der Polschuhe 22a und 22b variiert der Abstand zwischen den Ecken 44 und 46 zu dem ersten Polschuh 22a. Beispielsweise weist die Ecke 44 einen kleineren Abstand zu dem ersten Palschuh auf als die Ecke 46. Das Magnetfeld weist somit an der Ecke 44 eine andere Feldstärke auf als an der Ecke 46.

Entsprechend ist auch ein Abstand zwischen der Ecke 48 und dem zweiten Polschuh 22b ungleich einem Abstand zwischen der Ecke 50 und dem zweiten Polschuh 22b. Somit ist die lokale Feldstärke des Magnetfelds an der Ecke 48 ungleich der lokalen Feldstärke des Magnetfelds an der Ecke 50. Diese ungleiche Verteilung der Feldstärke des Magnetfelds bezüglich ausgewählter Bereiche des Zwisehenfahmens 30, beispielsweise der Ecken 44 bis 50, bewirkt die unten beschriebenen Vorteile.

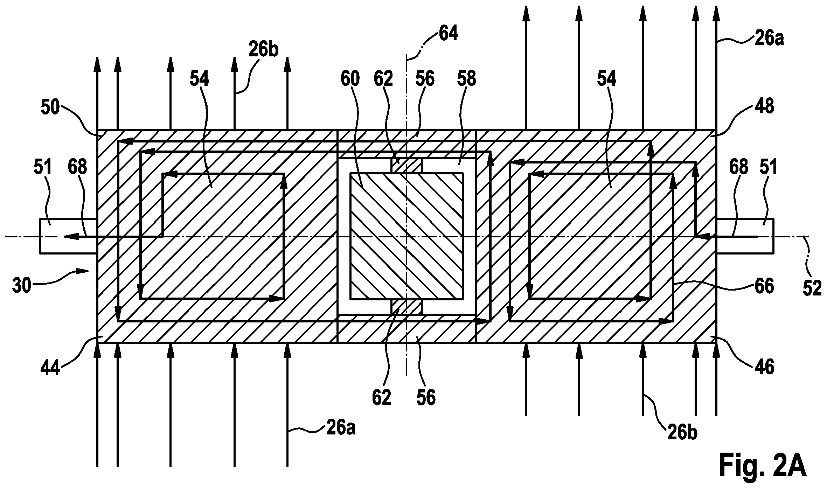

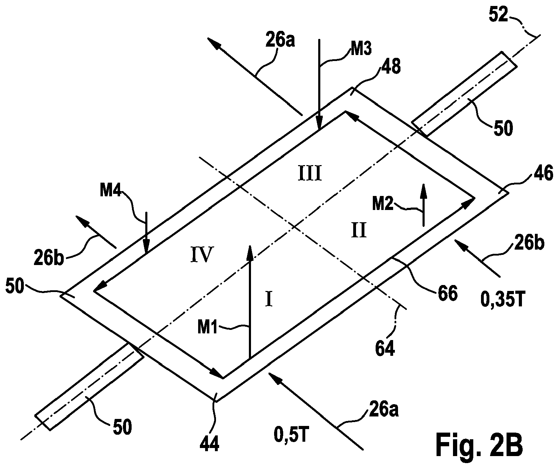

Figur 2A und 2B zeigen eine Draufsicht und eine Seitenansicht eines Zwischenrahmens zum Darstellen einer Ausführungsform des mikromechanischen Bauteils.

Der in Figur 2A schematisch wiedergegebene Zwischenrahmen 30 (innere Platte) ist über zwei Außenfedern 51 mit einer nicht dargestellten Halterung (mit einem Außenrahmen) verbunden. Die Halterung umfasst ein (nicht dargestelltes) Magnetjoch, welches als unsymmetrisches Magnetjoch ausgebildet ist. Der Zwischenrahmen 30 ist somit in dem Magnetjoch fixiert. Beispielsweise entspricht das Magoctjoch der Ausführungsform der Figuren 1A und 1B. Auf den Aufbau des Magnetjochs wird deshalb hier nicht eingegangen.

Die beiden Außenfedern 51 verlaufen entlang einer ersten Drehachse 52, um welche der Zwischenrahmen 30 gegenüber der Halterung drehbar ist. Beispielsweise sind die beiden Außenfedern 51 als Torsionsfedern ausgebildet.

Der Zwischenrahmen 30 weist an einer zu einem ersten Polschuh des Magnetjochs benachbarten Seite die Ecken 44 und 46 und an einer zu einem zweiten Polschuh des Magnetjochs benachbarten Seite die Ecken 48 und 50 auf. Dabei liegen sich die Ecken 44 und 48 und die Ecken 46 und 50 diagonal gegenüber. Der Zwischenrahmen 30 ist über die Außenfedern 51 so innerhalb des Jochspalts des Magnetjochs angeordnet, dass die Ecke 44 einen kleineren ersten Abstand zu dem ersten Polschuh aufweist als die Ecke 46. Entsprechend ist auch der Abstand zwischen der Ecke 48 und dem zweiten Polschuh kleiner als der Abstand zwischen der Ecke 50 und dem zweiten Polschuh.

Aufgrund der unterschiedlichen Abstände zwischen den Ecken 44 und 46 (bzw. 48 und 50) und dem jeweiligen benachbarten Polschuh, weist das Magnetfeld des Magnetjochs an den Ecken 44 bis 50 unterschiedliche Feldstärken auf. Wie in Figur 2A anhand der magnetischen Feldlinien 26a dargestellt ist, weist das Magnetfeld an den diagonal gegenüberliegenden Ecken 44 und 48 eine vergleichsweise große Feldstärke auf. Demgegenüber ist der Betrag des Magnetfelds an den Ecken 46 und 50, welche eine Diagonale des Zwischenrahmens 30 definieren, vergleichsweise klein (siehe magnetischen Feldlinien 26b).

Der Zwischenrahmen 30 umfasst zwei Seitenplatten 54, welche über zwei Verbindungsstege 56 miteinander verbunden sind. Vorzugsweise verläuft dabei die Außenseite eines Verbindungsstegs 56 entlang einer Außenseite der beiden Seitenplatten 54. Die beiden Seitenplatten 54 und die beiden Verbindungsstege 56 spannen somit eine Öffnung 58 auf, in welcher ein Stellelement 60, beispielsweise eine Spiegelplatte, angeordnet ist. Das Stellelement 60 ist mittels mindestens einer Innenfeder 62 mit dem Zwischenrahmen 30 verbunden. Beispielsweise verläuft von jedem der beiden Verbindungsstege 56 je eine Innenfeder 62 zu dem Stellelement 60. Die vorzugsweise als Torsionsfedern ausgebildeten Innenfedern 62 verlaufen dabei entlang einer zweiten Drehachse 64, welche nicht-parallel zu der ersten Drehachse 52 ausgerichtet ist. Vorzugsweise verläuft die zweite Drehachse 64 senkrecht zu der ersten Drehachse 52.

Der Zwischenrahmen 30 mit den Komponenten 54 und 56 kann einstückig ausgebildet sein. Vorzugsweise ist der Zwischenrahmen 30 mit den Federn 50 und 62 und dem Stellelement 60 aus einer Siliziumschicht herausstrukturiert. Zusätzlich können noch Komponenten der Halterung aus der Siliziumschicht gebildet werden.

Der Zwischenrahmen 30 kann beispielsweise eine Länge entlang der ersten Drehachse 52 von etwa 12 mm und eine Breite entlang der zweiten Drehachse 64 von etwa 4 mm aufweisen. Die Innenfedern 62 und die Außenfedern 51 weisen vorzugsweise eine Länge von 400 bis 500 µm auf. Der Durchmesser des Stellelements 60 kann beispielsweise bei 1 bis 2 mm liegen. Dieser vergleichsweise breite Zwischenrahmen 30 hat auch bei Herstellungsschritten, wie zum Beispiel Sägen oder Bonden, eine gute mechanische Stabilität.

An dem Zwischenrahmen 30 sind Leiterbahnen 66 als bestrombare Spule angeordnet. Beispielsweise sind die Leiterbahnen 66 aus einer leitfähigen Schicht herausstrukturiert. Über zusätzliche Zuleitungen, welche über jeweils eine der beiden Außenfedern 51 verlaufen, wird eine Sensiereinrichtung angebunden. Dabei ist die Steuereinrichtung dazu ausgelegt, die Stromstärke des durch die Leiterbahnen 66 fließenden Stroms zu steuern.

Der Zwischenrahmen 30 ist mittels der ersten Drehachse 52 und der zweiten Drehachse 64 in vier Quadranten I bis IV unterteilbar, von welchen ein erster und ein zweiter Quadrant I und II dem ersten Polschuh benachbart und ein dritter und vierter Quadrant III und IV dem zweiten Polschuh benachbart angeordnet sind. Durch die unsymmetrische Ausbildung des Magnetjochs weisen die Leiterbahnen 66 der Quadranten I bis IV mindestens zwei unterschiedliche mittlere Abstände zu dem nächstliegenden Polschuh auf. So ist ein mittlerer Abstand der Leiterbahnen 66 des ersten Quadranten I zu dem ersten Polschuh kleiner als ein mittlerer Abstand der Leiterbahnen 66 des zweiten Quadranten II zu dem ersten Polschuh. Entsprechend ist auch ein mittlerer Abstand der Leiterbahnen 66 des dritten Quadranten III zu dem zweiten Polschuh kleiner als ein mittlerer Abstand der Leiterbahnen 66 des vierten Quadranten IV zu dem zweiten Polschuh.

Dies bewirkt, dass in den Bereichen der Leiterbahnen 66 der Quadranten I bis IV mindestens zwei verschiedene mittlere magnetische Feldstärken vorliegen. Beispielsweise beträgt die mittlere magnetische Feldstärke in den Bereichen der Leiterbahnen 66 der Quadranten I und III einen Wert von 0,5T während in den Bereichen der Leiterbahnen 66 der Quadranten II und IV eine mittlere magnetische Feldstärke von etwa 0,35T vorliegt.

Somit bewirkt ein Stromfluss durch die Leiterbahnen 66 unterschiedliche Lorentzkräfte und damit auch unterschiedliche Drehmomente M1 bis M4 auf die Quadranten I bis IV. Dies ist in Figur 2B schematisch dargestellt. Auf ein Einzeichnen des Stellelements 60 und der Innenfedern 62 wurde dabei der besseren Übersichtlichkeit wegen verzichtet.

Beispielsweise sind die Beträge der Drehmomente M1 und M3 der Quadranten I und III deutlich größer als die Beträge der Drehmomente M2 und M4 der Quadranten II und IV. Vorzugsweise sind die Beträge der Drehmomente M1 und M3 der Quadranten I und III bei einer Bestromung der Leiterbahnen 66 um etwa 30 % größer als die Beträge der Drehmomente M2 und M4 der Quadranten II und IV. Dabei sind die Drehmomente M1 und M2 der Quadranten I und II in eine Richtung gerichtet. Die Drehmomenten M3 und M4 der Quadranten III und IV sind entgegen der Richtung der Drehmomente der Quadranten I und II ausgerichtet.

Durch die voneinander abweichenden Beträge der auf die Quadranten I bis IV wirkenden Drehmomente M1 bis M4 ist die bewirkte Drehbewegung des Stellelements 60 eine Summe aus einer ersten Teildrehung um die erste Drehachse 51 und einer zweiten Teildrehung um die zweite Drehachse 64.

Im Weiteren wird ein besonders vorteilhaftes Verfahren zum Verstellen des Stellelements beschrieben: Dabei wird das kardanisch aufgehängte Stellelement 60 für eine Drehung um die zweite Drehachse 64 (resonante Achse) mit einer vergleichsweise großen Resonanzfrequenz, beispielsweise im kHz-Bereich, wie bei ca. 20 kHz, angeregt. Demgegenüber wird das Stellelement bei einer signifikant kleineren Frequenz, beispielsweise bei 60 Hz, um die erste Drehachse 52 (statische Achse)verstellt (quasistatischer Modus).

Da die Drehungen um die resonante Achse und um die statische Achse über eine aus den Leiterbahnen 66 gebildete einzelne Spuleneinrichtung angeregt werden, ist das Ansteuerkonzept vergleichsweise einfach. Das hochfrequente Ansteuersignal und quasistatische Ansteuersignal werden dabei überlagert. Entsprechend können auch zwei Spulen mit den jeweiligen Signalen bereitgestellt werden.

Die hier beschriebene Ausführungsform weist zusätzlich den Vorteil auf, dass nur ein Hartmagnet mit einer Magnetisierungsrichtung für das Magnetjoch verwendet wird. Für den Aufbau des magnetischen Antriebs müssen somit keine gegenseitigen Abstoßungskräfte von mehreren Magneten überwunden werden. Darüber hinaus besteht die Möglichkeit, den Hartmagneten in einen unmagnetischen Zustand zu verbauen und ihn erst nach Montage in einem äußeren Feld aufzumagnetisieren.

Die auf diese Weise erreichbare vergleichsweise große Feldstärke ermöglicht eine geringere Stromstärke für ein ausreichendes Bestromen der Leiterbahnen 66. Vorzugsweise ist das Magnetfeld im Bereich der Leiterbahnen 66 in vertikaler Richtung (senkrecht zu den Drehachsen 52 und 64) annähernd gradientenfrei. Die aus den Leiterbahnen 66 gebildete Spule kann beispielsweise eine Windungszahl von 10 Windungen aufweisen. Ein Bestromen der Leiterbahnen 66 mit einer Stromstärke von 50 mA bewirkt in diesem Fall ein Drehmoment M1 oder M3 von ca. 5 bis 6 µNm.

Dabei gewährleistet eine geringe Stromstärke eine längere Verwenlbarkeit des mikromechanischen Bauteils, da zu hohe Ströme häufig zu einer übermäßigen Erhitzung der Leiterbahnen 66 und damit zu deren Beschädigung führen.

Entsprechend können auch weniger Leiterbahnen 66 für die Spuleneinrichtung gebildet werden, wobei trotzdem eine gleichbleibende Krafterzeugung realisierbar ist. Die dadurch gewährleistete Reduzierung der Anzahl von Windungen der Leiterbahnen 66 ermöglicht einen reduzierten Widerstand.

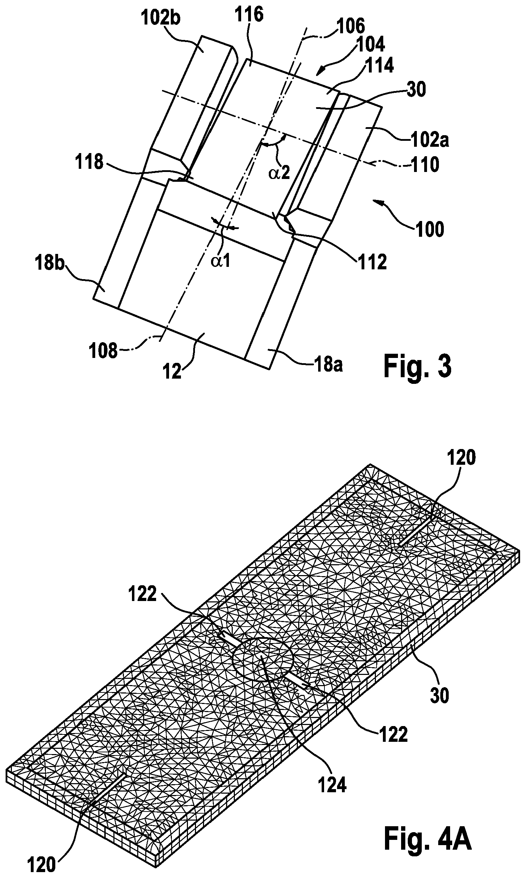

Figur 3 zeigt eine Seitenansicht zum Darstellen einesmikromechanischen Bauteils, welches nicht unter die vorliegende Erfindung fällt.

Das dargestellte mikromechanische Bauteil 100 umfasst ein Magnetjoch aus einem Hartmagneten 12, Jocharme 18a und 18b und Polschuhen 102a und 102b. Im Gegensatz zu den oben beschriebenen Polschuhen sind die Polschuhe 102a und 102b jeweils symmetrisch zu einer Mittelebene des Magnetjochs ausgebildet. Der besseren Übersichtlichkeit wegen ist die Mittelebene, welche den Hartmagneten 12, die Jocharme 18a und 18b und die Polschuhe 102a und 102b in jeweils zwei zueinander symmetrische Teile unterteilt, jedoch nicht in Figur 3 eingezeichnet.

Der zwischen den Polschuhen 102a und 102b liegende Jochspalt 104 kann mittels einer Mittelachse 106 in zwei Teile unterteilt werden, wobei ein erster Teil benachbart zu einem ersten Polschuh 102a und ein zweiter Teil benachbart zu dem zweiten Polschuh 102b liegt. Die Polschuhe 102a und 102b sind jeweils im gleichen Abstand zu der Mittelachse 106 des Jochspalts 104 an ihren zugehörigen Jocharmen 18a und 18b angeordnet.

In dem Jochspalt 104 ist ein Zwischenrahmen 30 mit einem verstellbaren Stellelement angeordnet. Bei dem Beispiel der Figur 3 wurde jedoch auf ein Einzeichnen der einzelnen Komponenten des Zwischenrahmens 30 verziehtet.

Das Stellelement des Zwischenrahmens 30 ist um zwei Drehachsen 108 und 110, welche vorzugsweise in einem Winkel von 90° zueinander ausgerichtet sind, verstellbar. Das Verstellen des Stellelements um mindestens eine der beiden Drehachsen 108 und 110 erfolgt dabei mittels eines Stromflusses durch Leiterbahnen, welche fest an dem Zwischenrahmen 30 angeordnet sind.

Bei dem mikromechanischen Bauteil 100 ist der Zwischenrahmen 30 in seiner stromlosen Ausgangslage so in den Jochspalt 104 angeordnet, dass die Mittelachse 106 in einer von den beiden Drehachsen 108 und 110 aufgespannten Ebene liegt. Gleichzeitig sind beiden Drehachsen 108 und 110 gegenüber der Mittelachse 106 in einem Neigungswinkel α1 oder α2 ungleich 0° und ungleich 90° aufgerichtet Man kann die Stellung des Zwischenrahmen 30 in dem Jochspalt 104 auch so beschreiben, dass die seitlichen Außenflächen des Zwischenrahmens 30 gegenüber den Kontaktflächen der Polschuhe 102a und 102b, welche an den Jochspalt 104 angrenzen, geneigt ausgerichtet sind. Der Zwischenrahmen 30 liegt somit schräg/quer in dem Jochspalt 104.

Die Ecken 112 bis 118 des Zwischenrahmens 30 weisen somit unterschiedliche Abstände zu ihrem nächstliegenden Polschuh 102a oder 102b auf Beispielsweise weist die Ecke 112 einen größeren Abstand zu dem benachbarten ersten Polschuh 102a auf als die zweite Ecke 114a. Ebenso ist die der Ecke 112 diagonal gegenüber liegende Ecke 116 näher an dem zweiten Polschuh 102b ungeordnet als die der Ecke 114 diagonal gegenüber liegende Ecke 118.

Auch bei dieser Ausführungsform kann der Zwischenrahmen 30 mittels der Drehachsen 108 und 110 in vier Quadranten unterteilt werden, wobei die (nicht skizzierten) Leiterbahnen der Quadranten unterschiedliche mittlere Abstände zu dem nächstliegenden Polschuh 102a oder 102b aufweisen. Entsprechend liegen in den Bereichen der Leiterbahnen der Quadranten unterschiedliche mittlere magnetische Feldstärken vor. Dies ermöglicht die anhand des vorhergehenden Beispiels beschriebene vorteilhafte ßetriebweise des mikromechanischen Bauteils 100.

In einer weiteren, hier nicht bildlich dargestellten Ausführungsform des mikromechanischen Bauteils können die Leiterbahnen der Spuleneinrichtung gegenüber mindestens einer der beiden Drehachsen unsymmetrisch ausgelegt sein. Beispielsweise kann über einen unterschiedlichen Abstand der Leiterbahnen von einer ersten Drehachse bewirkt werden, dass auch in dem Fall, in welchem die erste Drehachse auf einer Mittelachse eines Jochspalts liegt, mindestens zwei unterschiedliche mittlere magnetische Feldstärken in den Bereichen der Leiterbahnen der vier Quadranten vorliegen. Insbesondere fiihren die unterschiedlichen Abstände der Leiterbahnen von zwei auf einer Seite von einer ersten Drehachse liegenden Quadraten zu der ersten Drehachse zu einem signifikanten Variieren der zugehörigen Drehmomente. Auch bei dieser Ausführungsform können unterschiedliche Drehmomente auf die vier Quadranten Mittels eines Stromflusses durch eine Spule erzeugt werden. Entsprehend können die Leiterbahnen auf dem Zwischenrahmen auch so angeordnet werden, dass die Quadranten eine unterschiedliche Anzahl von Leiterbahnen aufweisen.

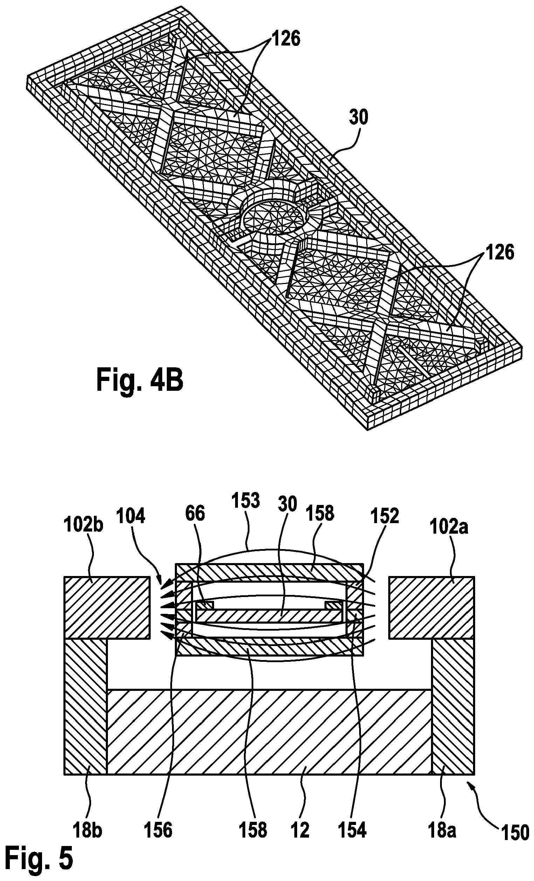

Figuren 4A und 4B zeigen eine Vorder- und eine Rückseite eines Zwischenrahmens mit einem als Spiegelplatte ausgebildeten Stellelement

Die anhand der Figuren 4A und 4B wiedergegebenen Zwischenrahmen 30 können in einem Jochapalt eines Magnetjochs einer der beiden oben beschriebenen Ausführungstformen eingebaut werden. Dabei zeigt Figur 4A eine Vorderseite von zwei kardanisehen Aufhängungen der Spiegelplatte 124 mittels zweier äußerer Torsionsfedern 120 und zweier innerer Torsionsfedern 122. In Figur 4B ist die Rückseite der kardanischen Aufhängung des Zwischenrahmens 30 dargestellt. Dabei sind die auf der Rückseite des Zwischenrahmens angebrachten Versteifungen 126 zu erkennen.

Figur 5 zeigt einen Querschnitt zum Darstellen eines mikromechanischen Bauteils, welches nicht unter die vorliegende Erfindung fällt.

Das dargestellte mikromechanische Bauteil 150 umfasst ein aus einem Hartmagneten 12, Jocharmen 18a und 18b und Polschuhen 102a und 102b zusammengesetztes Magnetjoch. Anstelle der zu einer Mittelebene des Magnetjochs symmetrischen Polschuhe 102a und 102b kann das Magnetjoch auch mindestens einen Polschuh aufweisen, dessen Masseverteilung bezüglich der (nicht skizzierten) Mittelebene nicht symmetrisch ist (siehe Figur 1B).

Innerhalb des Jochspalts 104 zwischen den beiden Polschuhen 102a und 102b ist ein Außenrahmen 152 angeordnet. Der Außenrahmen 152 ist beispielsweise Bestandteils einer Halterung, welche auch das Magnetjoch mit den Komponenten 12, 18a und 18b und 102a und 102b zugeordnet ist. Der Außenrahmen 152 umgibt einen Zwischenrahmen 30 mit als Spule ausgebildeten Leiterbahnen 66 und einem (nicht skizzierten) Stellelement. Das Verstellelement des Zwischenrahmens 30 ist beispielsweise eine kardanisch aufgehängte Spiegelplatte, welche mittels einer Lorentzkraft verstellbar ist. Die mindestens eine Außenfeder, über welche der Zwischenrahmens 30 mit dem Außenrahmen 152 verbunden ist, und die mindestens eine Innenfeder zwischen dem Zwisehenrahmen und dem Stellelement sind in Figur 5 der besseren Übersichtlichkeit wegen nicht dargestellt.

Die Leiterbahnen 66 sind vorzugsweise auf den Zwischenrahmen 30 lithographisch als Planarspule ausgebildet. Dabei ist es vorteilhaft, wenn die Leiterbahnen 66 möglichst hoch ausgebildet werden und der Abstand zwischen den Leiterbahnen 66 möglichst klein gewählt wird. Eine Ausbildung der Leiterbahnen 66 aus mehrerer Lagen ist besonders vorteilhaft.

Der Zwischenrahmen 30 kann aus einer Siliziumschicht herausstrukturiert werden. Dabei können auch Rahmenteile 154 geformt werden, welche Bestandteile des Außenrahmens 152 sind. Mittels der Verbindungsteile 156 können zwei Kappenekmente 158 so an den Rahmenteil 154 befestigt werden, dass sowohl eine Oberseite als auch eine Unterseite des Zwischenrahmens 30 abgedeckt sind. Der aus den Rahmenteilen 154, den Verbindungsteilen 156 und den Kappenelementen 158 zusammengesetzte Außenrahmen 152 kann luftdicht ausgebildet sein. Somit sind der Zwischenrahmen 30 mit den Leiterbahnen 66 und dem Stellelement während eines Betriebs des mikromechanischen Bauteils 150 gut vor Verschmutzungen geschützt.

Der Außenrahmen 152 kann so in den Lochspalt 104 angeordnet sein, dass die Drehachsen des Stellelements in Neigungswinkeln ungleich 0° und ungleich 90° zu einer Mittelachse des Jochspalts 104 geneigt sind. Da eine derartige Anordnung des Zwischenrahmens in dem Jochspalt 104 anhand der Figur 3 bereits beschrieben ist, wird hier nicht noch einmal darauf eingegangen.

Bei einer Bestromung der Leiterbahnen 66 soll der Zwischenrahmen 30 die oben schon beschriebenen Drehmomente erfahren. Es ist vorteilhaft, wenn die magnetischen Feldlinien 153 des Magnetfelds des Magnetjochs so in das Innere des Außenrahmens 152 geleitet werden, dass im Bereich der Leiterbahnen 66 eine ausreichend großes Feldstärke des Magnetfelds vorliegt.

Im Folgenden werden Möglichkeiten zum Erhöhen der im Bereich der Leiterbahnen 66 vorliegenden Feldstärke des Magnetfelds beschrieben.

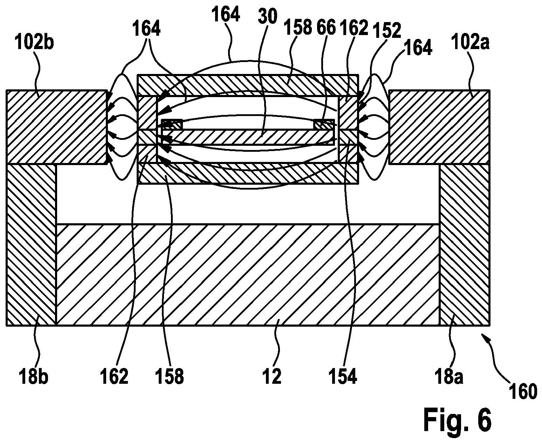

Figur 6 zeigt einen Querschnitt zum Darstellen eines mikromechanischen Bauteils, welches nicht unter die vorliegende Erfindung fällt.

Das dargestellte mikromechanische Bauteil 160 weist die oben schon beschriebenen Komponenten 12, 18a und 18b, 102a und 102b und 152 auf. Als Ergänzung zu dem anhand der Figur 5 beschriebenen mikromechanischen Bauteil sind die Verbindungsteile 162, mit welchen die Kappenelemente 158 an den Rahmenteil 154 befestigt sind, aus einem weichmagnetischen Material gebildet.

Wie anhand der magnetischen Feldlinien 164 dargestellt ist, wird das Magnetfeld durch die Verwendung der permeablen Verbindungsteile 162 in den Bereichen der Leiterbahnen 66 konzentriert. Das Magnetfeld wird somit über die Verbindungsteile 162 gut in das Innere des Außenrahmens 152 geleitet. Anstelle oder als Ergänzung zu den Eisenpartikeln kann das weichmagnetische Material zum Bilden der Verbindungsteile 162 auch mit anderen Metallpartikeln vermischt sein.

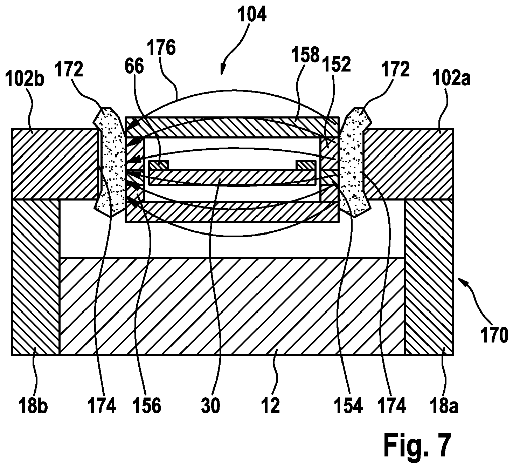

Figur 7 zeigt einen Querschnitt zum Darstellen eines mikromechanischen Bauteils, welches nicht unter die vorliegende Erfindung fällt.

Das mikromechanische Bauteil 170 weist gegenüber der anhand der Figur 5 beschriebenen Ausführungsform die Ergänzung auf, dass der äußere Rahmen 152 mittels eines permeablen Klebers 172 an den Polsehuhen 102a und 102b festgeklebt ist. Das Fixieren des Außenrahmens 152 mittels des permeablen Klebers 172 im Inneren des Jochspalls 104 bewirkt eine verbesserte Stabilität des mikromechanischen Bauteils 170. Vorzugsweise ist der permeable Kleber 172 dabei auf Kontaktflächen 174 der Polschuhe 102a und 102b angeordnet, welche den Jochspalt 104 umrahmen.

Der permeable Kleber 172 wirkt insbesondere analog einer Verkleinerung des Abstands zwischen den Kontaktflächen 174 und dem Außenrahmen 152. Dies ist über die magnetischen Feldlinien 176 bildhaft dargestellt. Der permeable Kleber 172 kann durch einen hoben Anteil von Metallpartikeln, beispielsweise Eisenpartikeln, permeabel gemacht werden.

In einer Weiterbildung können die Verbindungsteile 156, mittels welcher die Kappsnelemente 158 an dem Rahmenteil 154 hefestigt sind, ebenfalls mit Partikeln aus einem leitfähigen Material versetzt werden und/oder aus einem permeablen Kleber gebildet werden.

Die Verwendung des permeablen Klebers 172 wirkt gleich einer Verringerung des Abstands zwischen der Spuleneinrichtung 66 und den Kontaktflächen 174. Insbesondere geht somit ein Minimalabstand zwischen der Spuleneinrichtung 66 und den Kontaktflächen 174 gegen Null.

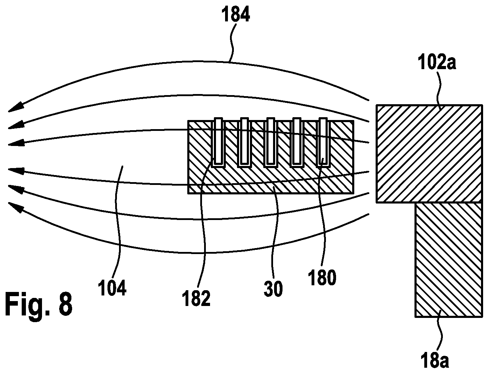

Figur 8 zeigt einen Teilausschnitt eines Querschnitts zum Darstellen eines mikromechanischen Bauteils, welches nicht unter die vorliegende Erfindung fällt.

In Figur 8 ist ein Magnetjoch mittels eines Jocharms 18a und eines an dem Jocharm 18a befestigten Polschuhs 102a schematisch wiedergegeben. Zwischen dem skizzierten Polschuh 102a und einem nicht dargestellten Polschub liegt ein Jochspalt 104 mit einem über die magnetischen Feldlinien 184 dargestellten Magnetfeld. Im Inneren des Jochspalts 104 ist ein Zwischenrahmen 30 mit einem verstellbaren (nicht skizzierten) Stellelement angeordnet. Der Zwischenrahmen 30 kann dabei der oben beschriebenen Ausführungsform entsprechen.

Die Polsehuhe 102a weisen eine Massenverteilung auf, welche symmetrisch zu einer Mittelebene des Magnetjochs ist. Anstelle der Polschuhe 102a. können an den Jocharmen 18a auch Polschuhe befestigt sein, deren Masseverteilung nicht symmetrisch gegenüber der Mittelebene des Magnctjochs ist (siehe Beispiel der Figur 1B).

Der in Figur 8 schematisch wiedergegebene Zwischenrahmen 30 umfasst Leiterbahnen 180 welche in Gräben 182 angeordnet sind. Die Durchstromfläche der Leiterbahnen 118 für die magnetischen Feldlinien 184 des Magnetfelds ist somit vergleichsweise groß. Die in den Gräben 182 gebildeten Leiterbahnen 118 weisen deshalb ein vergleichsweise hohes Aspektverhältnis auf. Dieses hohe Aspektverhältnis wirkt ähnlich einem reduzierten Abstand zwischen den Leiterbahnen 180 und den Polschuhen 102a. Somit ergibt sich eine hohe Stromtragfähigkeit und ein kleiner Abstand zum Magnetfeld.

Als Alternative oder als Ergänzung zu den in den Gräben 182 angeordneten Leiterbahnen 180 können auch zusätzliche Leiterbahnen auf der Rückseite des Stelletements angeordnet werden. Auf diese Wei se lassen sich die Feldlinien 184 gezielter an die in oder außerhalb von Gräben 182 ausgebildeten Leiterbahnen 180 hinführen.

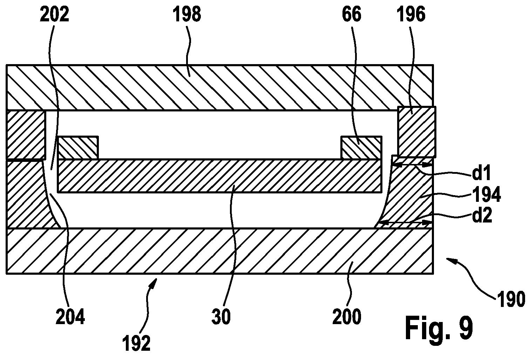

Figur 9 zeigt einen Querschnitt durch einen Außenrahmen zum Darstellen eines mikromechanischen Bauteils, welches nicht unter die vorliegende Erfindung fällt.

Auf die Darstellung des Magnetjochs des mikromechanischen Bauteils 190 wurde in Figur 9 verzichtet. Das mikromechanische Bauteil 190 kann jedoch ein Magnetjoch entsprechend der anhand der Figuren 1A, 1B, 2A, 2B, 3 und 5 bis 7 beschriebenen Ausführungsformen aufweisen.

Der in Figur 9 dargestellte Außenrahmen 192 umfasst ein Rahmenteil 194, welches zusammen mit dem Zwischenrahmen 30 aus einer Silizium- und/oder Glasschicht herausstrukturiert ist. Mittels eines auf eine Oberseite des äußeren Rahmenteils 194 aufgebrachten Verbindungsteils 196 ist eine obere Abdeckkappe 198 an den Rahmenteil 194 befestigt. Eine untere Abdeckkappe 200 ist direkt an einer Unterseite des Rahmenteils 194 befestigt.

Der aus den Komponenten 194 bis 200 zusammengesetzte Außenrahmen 192 kann den Zwischenrahmen, das nicht dargestellte Stellelement und die Leiterbalmen 66 luftdicht umschließen. Dies gewährleistet einen guten Schutz für die Komponenten 30 und 66 im Inneren des Außenrahmens 192.

Das Herausstrukturieren des Zwischenrahmens 30 und des Rahmenteils 194 aus der gemeinsamen Silizium- und /oder Glasschicht erfolgt vorzugsweise über ein Ätzen eines ersten Ätzgrabens (Trench) 202 ausgehend von einer Vorderseite des Zwischenrahmens 30 und ein Ätzen eines zweiten Ätzgrabens (Trench) 204 ausgehend von einer Unterseite des Zwischenrahmens 30. Ein stabileres Rahmenteil 194 kann erzielt werden, wenn das Ätzen des zweiten Ätzgrabens 204 von der Unterseite mit einem Hinterschnitt durchgeführt wird.

Das Rahmenteil 194 weist somit an seiner Oberseite einen ersten Durchmesser d1 und an seiner Unterseite einen zweiten Durchmesser d2 auf, wobei der zweite Durchmesser d2 größer als der erste Durchmesser d1 ist. Unter einem Durchmesser d1 oder d2 wird dabei eine Breite durch einen kompakten Abschnitt des Rahmenteils 194 verstanden.

Damit eine gute Beweglichkeit des Zwischenrahmens 30 gewährleistet ist, ist es vorteilhaft, wenn das in einem geringen Abstand zu dem Zwischenrahmen 30 ausgebildete Rahmenteil 194 in seinen oberen Bereichen mit dem Durchmesser d1 vergleichsweise dünn ausgebildet ist. Zusätzlich wirkt die Verdünnung entsprechend einer Reduzierung des Abstands zwischen den Leiterbahnen und den (nicht dargestellten) Polschuhen. Die Basis des Rahmenteils mit dem größeren zweiten Durchmesser d2 trägt hingegen zur mechanischen Stabilität des Rahmenteils 194, und damit zur mechanischen Stabilität des Außenrahmens 192 bei.

Das Rahmenteil 194 weist damit benachbart zu dem Innenvolumen des Außenrahmens 192 eine Wölbung auf. Diese Form des Rahmenteils 194 erlaubt eine gute Beweglichkeit des Zwischenrahmens 30 und des nicht dargestellten Stellelements.

Es wird hier daraufhingewiesen, dass die in den oberen Abschnitten beschriebenen mikromechanischen Bauteile mit einer Ausdehnung von etwa 5 bis 10 mm herstellbar sind. Dies ermöglicht einen Einbau der beschriebenen mikromechanischen Bauteile in ein kleines Mikrogerät, beispielsweise ein Handy.

## Patentansprüche

1. Magnetjoch (10) mit:
einem Magneten (12) mit einer Magnetisierungsrichtung (14), an welchem ein erster Jocharm (18a) und ein zweiter Jocharm (18b) so angeordnet sind, dass der Magnet (12) und die beiden Jocharme (18a,18b) einen sich von einer Vorderseite zu einer Rückseite des Magnetjochs erstreckenden Jochzwischenraum (20) aufspannen; und
einem an dem ersten Jocharm (18a) angeordneten ersten Polschuh (22a) und einem an den zweiten Jocharm (18b) angeordneten zweiten Polschuh (22b), zwischen welchen ein Jochspalt (24) liegt; wobei eine Mittelebene (32) definierbar ist, welche parallel zu der Magnetisierungsrichtung (14) ausgerichtet ist und den Magneten (12) und die beiden Jocharme (18a,18b) schneidet **dadurch gekennzeichnet, dass**
die Polschuhe (22a,22b) jeweils so ausgebildet sind,
dass ihre Masseverteilung keine Symmetrie hinsichtlich der Mittelebene (32) aufweist, wodurch der erste Polschuh (22a) an einem ersten Ende (40a) an der Vorderseite des Magnetjochs (10) parallel zu der Magnetisierungsrichtung (14) des Magneten (12) eine erste Breite (b1) und an einem dem ersten Ende (40a) gegenüberliegenden zweiten Ende (42a) an der Rückseite des Magnetjochs (10) parallel zu der Magnetisierungsrichtung (14) des Magneten (12) eine zweite Breite (b2) ungleich der ersten Breite (b1) aufweist.

2. Magnetjoch (10) nach Anspruch 1, wobei die Mittelebene (32) den ersten Polschuh (22a) in eine erste Hälfte (34a) und in eine zweite Hälfte (36a) unterteilt, und wobei die erste Hälfte (34a) gegenüber der zweiten Hälfte (36a) eine Zusatzmasse (38a) aufweist, welche in den Jochspalt (34) hineinragt.

3. Magnetjoch (10) nach Anspruch 2, wobei die Mittelebene (32) beide Polschuhe (22a,22b) in jeweils eine erste Hälfte (34a,34b) mit der Zusatzmasse (38a,38b) und in eine zweite Hälfte (36a,36b) ohne die Zusatzmasse (38a,38b) unterteilt.

4. Magnetjoch (10) nach Anspruch 2 oder 3, wobei sich die Zusatzmasse (38a,38b) in eine Richtung senkrecht zu einer Breite (bmax) des Jochspalts (24) entlang der gesamten ersten Hälfte (34a,34b) erstreckt.

5. Mikromechanisches Bauteil mit:
einem Magnetjoch (10) nach einem der Ansprüche 1 bis 4;
einem mittels mindestens einer entlang einer ersten Achse (52,108) ausgerichteten ersten Feder (51) in dem Jochspalt (24, 104) angeordneten Zwischenrahmen (30), welcher ein Stellelement (60) umrahmt, welches über mindestens eine entlang einer zweiten Achse (64,110) ausgerichtete zweite Feder (62) mit dem Zwischenrahmen (30) verbunden ist; und
an dem Zwischenrahmen (30) fest angeordneten Leiterbahnen (66), welche als Spule ausgebildet sind;
wobei der Zwischenrahmen (30) mittels der ersten Achse (52,108) und der zweiten Achse (64,110) in vier Quadranten (I bis IV) unterteilbar ist, von welchen ein erster und ein zweiter Quadrant (I,II) dem ersten Polschuh (22a, 102a) benachbart und ein dritter und vierter Quadrant (III,IV) dem zweiten Polschuh (22b,102b) benachbart angeordnet sind,
und wobei der Zwischenrahmen (30) so in dem Jochspalt (24, 104) angeordnet ist und die Leiterbahnen (66) so an dem Zwischenrahmen (30) angeordnet sind, dass ein mittlerer Abstand der Leiterbahnen (66) des ersten Quadranten (1) zu dem ersten Polschuh (22a,102a) kleiner als ein mittlerer Abstand der Leiterbahnen (66) des zweiten Quadranten (II) zu dem ersten Polschuh (22a,102a) ist.

6. Herstellungsverfahren für ein Magnetjoch (10) nach Anspruch 1 mit den Schritten:
Anordnen eines Magneten (12) mit einer Magnetisierungsrichtung (14) so zwischen einem ersten Jocharm (18a) und einem zweiten Jocharm (18b), dass der Magnet (12) und die beiden Jocharme (18a,18b) einen sich von einer Vorderseite zu einer Rückseite des Magnetjochs (10) erstreckenden Jochzwischenraum (20) aufspannen;
Anordnen eines ersten Polschuhs (22a) an dem ersten Jocharm (18a); und
Anordnen eines zweiten Polschuhs (22b) an dem zweiten Jocharm (18b) so, dass zwischen dem ersten Polschuh (22a) und dem zweiten Polschuh (22b) ein Jochspalt (24) liegt;
**gekennzeichnet durch** den Schritt, dass
die Polschuhe (22a,22b) jeweils so angeordnet werden, dass ihre Masseverteilung hinsichtlich einer Mittelebene (32), welche parallel zu der Magnetisierungsrichtung (14) ausgerichtet ist und den Magneten (12) und die beiden Jocharme (18a,18b) schneidet, keine Symmetrie aufweist, wodurch der erste Polschuh (22a) so gebildet wird, dass der erste Polschuh (22a) an einem ersten Ende (40a) an der Vorderseite des Magnetjochs (10) parallel zu der Magnetisierungsrichtung (14) des Magneten (12) eine erste Breite (b1) und an einem dem ersten Ende (40a) gegenüberliegenden zweiten Ende (42a) an der Rückseite des Magnetjochs (10) parallel zu der Magnetisierungsrichtung (14) des Magneten (12) eine zweite Breite (b2) ungleich der ersten Breite (b1) aufweist.

7. Herstellungsverfahren für ein mikromechanisches Bauteil (100) nach Anspruch 5 mit den Schritten:
Herstellen eines Magnetjochs (10) gemäß dem Herstellungsverfahren nach Anspruch 6;
Anordnen eines Zwischenrahmens (30) in dem Jochspalt (24,104) mittels mindestens einer entlang einer ersten Achse (52,108) ausgerichteten ersten Feder (51) und eines Stellelements (60) in einer Öffnung (58) des Zwischenrahmens (30), wobei das Stellelement (60) über mindestens eine entlang einer zweiten Achse (64,110) ausgerichteten zweite Feder (62) mit dem Zwischenrahmen (30) verbunden wird; und
Festes Anordnen von Leiterbahnen (66) als Spule an dem Zwischenrahmen (30); wobei der Zwischenrahmen (30) so in dem Jochspalt (24,104) angeordnet wird und die Leiterbahnen (66) so an dem Zwischenrahmen (30) angeordnet werden, dass nach einem Unterteilen des Zwischenrahmens (30) mittels der ersten Achse (52,108) und der zweiten Achse (64,110) in vier Quadranten (I bis IV), von welchen ein erster und ein zweiter Quadrant (I,II) dem ersten Polschuh (22a,102a) benachbart und ein dritter und vierter Quadrant (III,IV) dem zweiten Polschuh (22b,102b) benachbart angeordnet sind, ein mittlerer Abstand der Leiterbahnen (66) des ersten Quadranten (I) zu dem ersten Polschuh (22a,102a) kleiner als ein mittlerer Abstand der Leiterbahnen (66) des zweiten Quadranten (II) zu dem ersten Polschuh (22a,102a) ist.

## Claims

1. Magnet yoke (10) comprising:
a magnet (12) with a magnetization direction (14), on which magnet a first yoke arm (18a) and a second yoke arm (18b) are arranged such that the magnet (12) and the two yoke arms (18a, 18b) span a yoke intermediate space (20) which extends from a front side to a rear side of the magnet yoke; and a first pole shoe (22a), which is arranged on the first yoke arm (18a), and a second pole shoe (22b), which is arranged on the second yoke arm (18b), there being a yoke gap (24) between the said first pole shoe and second pole shoe;
wherein a centre plane (32) can be defined, which centre plane is oriented parallel to the magnetization direction (14) and intersects the magnet (12) and the two yoke arms (18a, 18b),
**characterized in that**
the pole shoes (22a, 22b) are each formed such that their mass distribution does not exhibit any symmetry with respect to the centre plane (32), as a result of which the first pole shoe (22a) has a first width (b1) at a first end (40a) on the front side of the magnet yoke (10) parallel to the magnetization direction (14) of the magnet (12) and has a second width (b2), which is different from the first width (b1), at a second end (42a), which is opposite the first end (40a), on the rear side of the magnet yoke (10) parallel to the magnetization direction (14) of the magnet (12).

2. Magnet yoke (10) according to Claim 1, wherein the centre plane (32) subdivides the first pole shoe (22a) into a first half (34a) and into a second half (36a), and wherein the first half (34a) has an additional mass (38a) in comparison to the second half (36a), the said additional mass projecting into the yoke gap (34).

3. Magnet yoke (10) according to Claim 2, wherein the centre plane (32) subdivides both pole shoes (22a, 22b) into in each case a first half (34a, 34b) with the additional mass (38a, 38b) and into a second half (36a, 36b) without the additional mass (38a, 38b).

4. Magnet yoke (10) according to Claim 2 or 3, wherein the additional mass (38a, 38b) extends in a direction perpendicular to a width (bmax) of the yoke gap (24) along the entire first half (34a, 34b).

5. Micromechanical component comprising:
a magnet yoke (10) according to one of Claims 1 to 4;
an intermediate frame (30) which is arranged in the yoke gap (24, 104) by means of at least one first spring (51) which is oriented along a first axis (52, 108), which intermediate frame frames an actuating element (60) which is connected to the intermediate frame (30) by means of at least one second spring (62) which is oriented along a second axis (64, 110); and
conductor tracks (66) which are fixedly arranged on the intermediate frame (30) and which are in the form of a coil;
wherein the intermediate frame (30) can be subdivided into four quadrants (I to IV) by means of the first axis (52, 108) and the second axis (64, 110), of which quadrants a first and a second quadrant (I, II) are arranged adjacent to the first pole shoe (22a, 102a) and a third and fourth quadrant (III, IV) are arranged adjacent to the second pole shoe (22b, 102b),
and wherein the intermediate frame (30) is arranged in the yoke gap (24, 104) and the conductor tracks (66) are arranged on the intermediate frame (30) such that an average distance of the conductor tracks (66) of the first quadrant (I) from the first pole shoe (22a, 102a) is less than an average distance of the conductor tracks (66) of the second quadrant (II) from the first pole shoe (22a, 102a).

6. Production method for a magnet yoke (10) according to Claim 1, comprising the steps of:
arranging a magnet (12) with a magnetization direction (14) between a first yoke arm (18a) and a second yoke arm (18b) such that the magnet (12) and the two yoke arms (18a, 18b) span a yoke intermediate space (20) which extends from a front side to a rear side of the magnet yoke (10);
arranging a first pole shoe (22a) on the first yoke arm (18a); and
arranging a second pole shoe (22b) on the second yoke arm (18b), so that there is a yoke gap (24) between the first pole shoe (22a) and the second pole shoe (22b); **characterized by** the step that
the pole shoes (22a, 22b) are each arranged such that their mass distribution does not exhibit any symmetry with respect to a centre plane (32) which is oriented parallel to the magnetization direction (14) and intersects the magnet (12) and the two yoke arms (18a, 18b), as a result of which the first pole shoe (22a) is formed such that the first pole shoe (22a) has a first width (b1) at a first end (40a) on the front side of the magnet yoke (10) parallel to the magnetization direction (14) of the magnet (12) and has a second width (b2), which is different from the first width (b1), at a second end (42a), which is opposite the first end (40a), on the rear side of the magnet yoke (10) parallel to the magnetization direction (14) of the magnet (12).

7. Production method for a micromechanical component (100) according to Claim 5, comprising the steps of:
producing a magnet yoke (10) in accordance with the production method according to Claim 6;
arranging an intermediate frame (30) in the yoke gap (24, 104) by means of at least one first spring (51) which is oriented along a first axis (52, 108), and arranging an actuating element (60) in an opening (58) in the intermediate frame (30), wherein the actuating element (60) is connected to the intermediate frame (30) by means of at least one second spring (62) which is oriented along a second axis (64, 110); and
fixedly arranging conductor tracks (66) as a coil on the intermediate frame (30);
wherein the intermediate frame (30) is arranged in the yoke gap (24, 104) and the conductor tracks (66) are arranged on the intermediate frame (30) such that, after the intermediate frame (30) has been subdivided into four quadrants (I to IV) by means of the first axis (52, 108) and the second axis (64, 110), of which quadrants a first and a second quadrant (I, II) are arranged adjacent to the first pole shoe (22a, 102a) and a third and fourth quadrant (III, IV) are arranged adjacent to the second pole shoe (22b, 102b), an average distance of the conductor tracks (66) of the first quadrant (I) from the first pole shoe (22a, 102a) is less than an average distance of the conductor tracks (66) of the second quadrant (II) from the first pole shoe (22a, 102a).

## Revendications

1. Culasse d'aimant (10) comportant :
un aimant (12) ayant une direction de magnétisation (14), sur lequel une première branche de culasse (18a) et une deuxième branche de culasse (18b) sont disposées de manière à ce que l'aimant (12) et les deux branches de culasse (18a, 18b) englobent un espace intermédiaire de la culasse (20) s'étendant d'une face avant à une face arrière de la culasse d'aimant ; et
une première pièce polaire (22a) disposée sur la première branche de culasse (18a) et une deuxième pièce polaire (22b) disposée sur la deuxième branche de culasse (18b), entre lesquelles se trouve un entrefer de culasse (24) ;
dans lequel il est possible de définir un plan médian (32) qui est orienté parallèlement à la direction de magnétisation (14) et passe par l'aimant (12) et les deux branches de culasse (18a, 18b),
**caractérisé en ce que** les pièces polaires (22a, 22b) sont respectivement réalisées de manière à ce que leur distribution de masse ne présente pas de symétrie par rapport au plan médian (32), la première pièce polaire (22a) présentant une première largeur (b1) au niveau d'une première extrémité (40a) sur la face avant de la culasse d'aimant (10), parallèlement à la direction de magnétisation (14) de l'aimant (12) et présentant une deuxième largeur (b2) différente de la première largeur (b1) au niveau d'une deuxième extrémité (42a) opposée à la première extrémité (40a) sur la face arrière de la culasse d'aimant (10), parallèlement à la direction de magnétisation (14) de l'aimant (12).

2. Culasse d'aimant (10) selon la revendication 1, dans laquelle le plan médian (32) divise la première pièce polaire (22a) en une première moitié (34a) et en une deuxième moitié (36a), et dans laquelle la première moitié (34a) présente, par rapport à la deuxième moitié (36a), une masse supplémentaire (38a) qui fait saillie dans l'entrefer de culasse (34).

3. Culasse d'aimant (10) selon la revendication 2, dans laquelle le plan médian (32) divise les deux pièces polaires (22a, 22b) respectivement en une première moitié (34a, 34b) comportant la masse supplémentaire (38a, 38b) et en une deuxième moitié (36a, 36b) ne comportant pas la masse supplémentaire (38a, 38b).

4. Culasse d'aimant (10) selon la revendication 12 ou 3, dans laquelle la masse supplémentaire (38a, 38b) s'étend dans une direction perpendiculaire à une largeur (bmax) de l'entrefer de culasse (24), le long de la totalité de la première moitié (34a, 34b).

5. Composant micromécanique, comportant :
une culasse d'aimant (10) selon l'une quelconque des revendications 1 à 4 ;
un cadre intermédiaire (30) disposé dans l'entrefer de culasse (24, 104) au moyen d'au moins un premier ressort (51) orienté le long d'un premier axe (52, 102), lequel cadre intermédiaire encadre un élément de réglage (60) qui est relié au cadre intermédiaire (30) par l'intermédiaire d'au moins un deuxième ressort (62) orienté le long d'un deuxième axe (64, 110) ; et
des pistes conductrices (66) disposées de manière fixe sur le cadre intermédiaire (30), lesquelles pistes conductrices sont réalisées sous la forme de bobines ;
dans lequel le cadre intermédiaire (30) peut être divisé au moyen du premier axe (52, 108) et du deuxième axe (64, 110) en quatre quadrants (I à IV), parmi lesquels des premier et deuxième quadrants (I, II) sont disposés de manière adjacente à la première pièce polaire (22a, 102a) et des troisième et quatrième quadrants (III, IV) sont disposés de manière adjacente à la deuxième pièce polaire (22b, 102b),
et dans lequel le cadre intermédiaire (30) est disposé dans l'entrefer de culasse (24, 104) et les pistes conductrices (66) sont disposées sur le cadre intermédiaire (30), de manière à ce qu'une distance moyenne entre les pistes conductrices (66) du premier quadrant (I) et la première pièce polaire (22a, 102a) soit inférieure à une distance moyenne entre les pistes conductrices (66) du deuxième quadrant (II) et la première pièce polaire (22a, 102a).

6. Procédé de fabrication d'une culasse d'aimant (10) selon la revendication 1, comportant les étapes consistant à :
disposer un aimant (12) ayant une direction de magnétisation (14) entre une première branche de culasse (18a) et une deuxième branche de culasse (18b), de manière à ce que l'aimant (12) et les deux branches de culasse (18a, 18b) englobent un espace intermédiaire de culasse (20) s'étendant d'une face avant à une face arrière de la culasse d'aimant (10) ;
disposer une première pièce polaire (22a) sur la première branche de culasse (18a) ; et
disposer une deuxième pièce polaire (22b) sur la deuxième branche de culasse (18b) de manière à ce qu'un entrefer de culasse (24) soit présent entre la première pièce polaire (22a) et la deuxième pièce polaire (22b) ;
**caractérisé par** l'étape selon laquelle
les pièces polaires (22a, 22b) sont respectivement disposées de manière à ce que leur répartition de masse par rapport à un plan médian (32), qui est orienté parallèlement à la direction de magnétisation (14) et passe par l'aimant (12) et les deux branches de culasse (18a, 18b), ne présente aucune symétrie, la première pièce polaire (22a) étant réalisée de manière à ce que la première pièce polaire (22a) présente une première largeur (b1) au niveau d'une première extrémité (40a) sur la face avant de la culasse d'aimant (10), parallèlement à la direction de magnétisation (14) de l'aimant (12), et présente une deuxième largeur (b2), différente de la première largeur (b1), au niveau d'une deuxième extrémité (42a) opposée à la première extrémité (40a) sur la face arrière de la culasse d'aimant (10), parallèlement à la direction de magnétisation (14) de l'aimant (12).

7. Procédé de fabrication destiné à un composant micromécanique (100) selon la revendication 5, comportant les étapes consistant à :
fabriquer une culasse d'aimant (10) conformément au procédé de fabrication selon la revendication 6 ;
disposer un cadre intermédiaire (30) dans l'entrefer de culasse (24, 104) au moyen d'au moins un premier ressort (51) orienté le long d'un premier axe (52, 108) et d'un élément de réglage (60) dans une ouverture (58) du cadre intermédiaire (30), dans lequel l'élément de réglage (60) est relié au cadre intermédiaire (30) par l'intermédiaire d'au moins un deuxième ressort (62) orienté le long d'un deuxième axe (64, 110) ; et
disposer de manière fixe des pistes conductrices (66) sous la forme de bobines sur le cadre intermédiaire (30) ;
dans lequel le cadre intermédiaire (30) est disposé dans l'entrefer de culasse (24, 104) et les pistes conductrices (66) sont disposées sur le cadre intermédiaire (30), de manière à ce que, par subdivision du cadre intermédiaire (30) au moyen du premier axe (52, 108) et du deuxième axe (64, 110) en quatre quadrants (I à IV), parmi lesquels des premier et deuxième quadrants (I, II) sont disposés de manière adjacente à la première pièce polaire (22a, 102a) et des troisième et quatrième quadrants (III, IV) sont disposés de manière adjacente à la deuxième pièce polaire (22b, 102b), une distance moyenne entre les pistes conductrices (66) du premier quadrant (I) et la première pièce polaire (22a, 102a) soit inférieure à une distance moyenne entre les pistes conductrices (66) du deuxième quadrant (II) et la première pièce polaire (22a, 102a).
